# EUROPÄISCHE PATENTSCHRIFT

(11) **EP 2 123 513 B1**
(45) Veröffentlichungstag und Bekanntmachung des Hinweises auf die Patenterteilung: **17.11.2010**
(21) Anmeldenummer: 08008727.3
(22) Anmeldetag: 09.05.2008
(51) Int. Cl.: B60Q 1/26

(54) **Vorrichtung zum Befestigen einer Leuchteneinheit an einem Fahrzeug**
Device for securing a lighting unit to a motor vehicle
Dispositif de fixation d'une unité d'éclairage sur un véhicule

(43) Veröffentlichungstag der Anmeldung: 25.11.2009
(73) Patentinhaber: odelo GmbH, 71409 Schwaikheim (DE)
(72) Erfinder: Schneider, Robert, 89198 Westerstetten (DE)
(74) Vertreter: Kaufmann, Ursula Josefine

(56) Entgegenhaltungen:
- EP-A- 0 860 321
- DE-A1- 3 426 711
- FR-A- 618 914
- US-A1- 2004 141 328

## Beschreibung

Die Erfindung betrifft eine Vorrichtung zum mindestens teilweisen Befestigen einer Leuchteneinheit an einem Fahrzeug nach dem Oberbegriff des Anspruchs 1.

Aus der DE 199 49 907 A1 ist eine als Heckleuchte ausgeführte Leuchteneinheit für ein Fahrzeug bekannt, deren Leuchtengehäuse über eine gattungsgemäße Vorrichtung mit Spiel und eine weitere Befestigungsvorrichtung ohne Spiel an der Karosserie des Fahrzeugs angebracht ist. Die als Steckverbindung ausgeführte Vorrichtung umfasst ein Haltemittel, das ein leuchteneinheitsseitiges Halteelement und ein mit dem leuchteneinheitsseitigen Halteelement zusammenwirkendes, vorrichtungsseitiges bzw. fahrzeugseitiges Halteelement aufweist. Das leuchteneinheitsseitige Halteelement ist als einteilig mit dem Leuchtengehäuse ausgebildeter Vorsprung ausgeführt, der in einer entsprechend ausgebildeten Ausnehmung entlang einer Längsachse im vorrichtungsseitigen Halteelement aufgenommen ist. Die weitere Befestigungsvorrichtung ist als Schraubverbindung ausgeführt.

Die DE 34 26 711 A1 offenbart eine Fahrzeugleuchteneinheit mit einem Gehäuse, einem Reflektor für das Fern- und Abblendlicht und einer Streuscheibe. Das Gehäuse der Fahrzeugleuchteneinheit ist in nicht dargestellter Weise an einer Fahrzeug-Karosserie befestigt. Ebenfalls ist eine linke, vordere Blinkleuchte offenbart, die eine Lichtscheibe und ein Gehäuse aufweist, dessen Seitenwand an das Gehäuse der Fahrzeugleuchteneinheit in nicht dargestellter Weise einschiebbar ist und dessen Rückwand durch zwei Zahnrichtgesperre losbar befestigt ist. Ein erstes Zahnrichtgesperre dient zum einschiebbaren Zusammenfügen der Blinkleuchte in das Gehäuse der Fahrzeugleuchteneinheit. Ein zweites Zahnrichtgesperre dient zum Ausrichten der Blinkleuchte bezüglich der Fahrzeug-Karosserie.

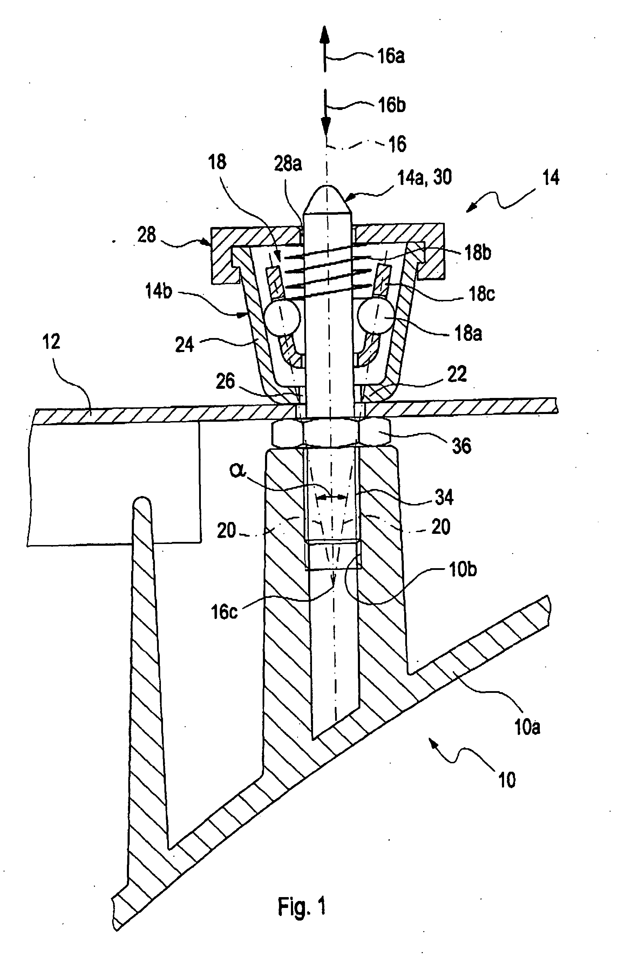

Die FR 618 914 A offenbart eine Fahrzeugleuchteneinheit mit einer Vorrichtung zum Feststellen einer drehbaren Leuchteneinheit mit einem Kugelgelenkkopf und einer den Kugelgelenkkopf aufnehmenden Hülse. Der Kugelgelenkkopf ist über eine Sperreinrichtung in der Hülse blockierbar beziehungsweise arretierbar. Die Sperreinrichtung umfasst einen Hebel, der über eine Drehachse auf ein durch eine Feder beaufschlagbares Hülsenelement wirkt, wobei die Feder durch eine Mutter vorgespannt ist. Das Hülsenelement wirkt dabei auf den Kugelgelenkkopf. Bei gekipptem Hebel hebt sich das Hülsenelement von dem Kugelgelenkkopf ab, wodurch die Leuchteneinheit verstellbar wird. Zur Blockierung der Leuchteneinheit wird der Hebel aus dem gekippten Zustand wieder in seine in der Figur dargestellte Ausgangslage zurückbewegt.

Der Erfindung liegt die Aufgabe zugrunde, eine Fahrzeugleuchteneinheit mit einer Vorrichtung zum mindestens teilweisen Befestigen der Leuchteneinheit an dem Fahrzeug bereitzustellen, bei welcher eine einfache und schnelle Montage der Leuchteneinheit am Fahrzeug ermöglicht ist.

Diese Aufgabe wird erfindungsgemäß mit den kennzeichnenden Merkmalen des Patentanspruchs 1 gelöst.

Bei einer erfindungsgemäßen Fahrzeugleuchteneinheit ist vorgesehen, dass das leuchteneinheitsseitige Halteelement über eine Sperreinrichtung in wenigstens einer Richtung der Längsachse selbsthemmend in dem fahrzeugseitigen Halteelement gehalten ist. In vorteilhafter Weise wird das leuchteneinheitsseitige Halteelement durch die Sperreinrichtung gehemmt bzw. blockiert, wenn sich die Sperreinrichtung in einer ersten Position befindet, und gelöst, wenn sich die Sperreinrichtung in einer zweiten Position befindet. Günstigerweise wird hierdurch eine einfache und schnelle Montage der Leuchteneinheit am Fahrzeug ohne hohen Werkzeugeinsatz ermöglicht.

Vorzugsweise weist die Sperreinrichtung eine Sperreinheit auf, die entlang einer Führungsachse bewegbar ist, welche die Längsachse der Vorrichtung schneidet. Hierdurch wird auf eine einfache Weise eine zwangsläufige Hemmung des leuchteneinheitsseitigen Halteelements im fahrzeugseitigen Halteelement ermöglicht, so dass die Leuchteneinheit sicher am Fahrzeug gehalten wird.

Bevorzugt weist die Sperreinrichtung eine Federeinheit auf, welche die Sperreinheit entlang der Längsachse zur Leuchteneinheit hin beaufschlagt. Hierdurch wird die Sperreinheit immer in Berührungskontakt mit dem leuchteneinheitsseitigen Haltemittel gehalten, wodurch dieses entgegen der Richtung der Federbelastung selbsthemmend und unverschiebbar gehalten wird. Somit ist die Leuchteneinheit über die Vorrichtung mit Spiel an der Karosserie des Fahrzeugs befestigt. In vorteilhafter Weise ermöglicht die Federeinheit eine Anordnung der erfindungsgemäßen Vorrichtung am Fahrzeug sowohl unabhängig von einem Gravitationseinfluss als auch unabhängig von eventuellen Belastungsfällen, wie beispielsweise Erschütterungen.

In einer vorteilhaften Ausgestaltung weist die Sperreinrichtung eine in dem fahrzeugseitigen Halteelement angeordnete Aufnahmeeinheit auf, welche die Sperreinheit aufnimmt. Diese einfache und kostengünstige Ausgestaltung ermöglicht eine sichere Aufnahme der Sperreinheit in dem fahrzeugseitigen Halteelement.

Vorzugsweise ist das fahrzeugseitige Halteelement als topfförmiges Bauteil mit einem Boden und einer sich an den Boden anschließenden Wandung ausgebildet ist, wobei der Boden mindestens eine Öffnung zur Durchführung des leuchteneinheitsseitigen Halteelements aufweist. In vorteilhafter Weise ermöglicht diese Ausgestaltung des fahrzeugseitigen Halteelements eine einfache Handhabung bzw. eine Montage der Vorrichtung, indem das Innere des fahrzeugseitigen Halteelements leicht zugänglich ist.

In einer vorteilhaften Ausgestaltung weist die Vorrichtung einen Deckel auf, welcher das fahrzeugseitige Halteelement überdeckt. Diese kostengünstige Ausgestaltung ermöglicht eine einfache Möglichkeit für die Abstützung der Federeinheit. Ferner können bei Abnahme des Deckels und der dadurch folgenden optimalen Zugänglichkeit die Bauteile der Sperreinrichtung einfach in dem fahrzeugseitigen Halteelement montiert werden.

Bevorzugt weist das leuchteneinheitsseitige Halteelement einen Dorn auf, der mindestens teilweise in dem fahrzeugseitigen Halteelement aufgenommen ist. Hierdurch ist eine sowohl konstruktiv als auch herstellungstechnisch einfache Realisierung des leuchteneinheitsseitigen Haltemittels möglich.

In vorteilhafter Weise ist die Aufnahmeeinheit als topfförmige Hülse ausgebildet, welche die Sperreinheit derart aufnimmt, dass die Sperreinheit zwischen dem Dorn des leuchteneinheitsseitigen Halteelements und der Wandung des fahrzeugseitigen Halteelements angeordnet ist. Hierdurch ist die Sperreinheit auf einfache und kostengünstige Weise sicher zwischen Dorn und Wandung aufgenommen. In vorteilhafter Weise ist die Sperreinheit beim Einstecken des Domes in das fahrzeugseitige Halteelement freigängig, während sie beim Herausziehen des Domes eine Blockade zwischen Dorn und vorrichtungsseitigem Haltemittel erzeugt.

In weiterer Ausgestaltung der Vorrichtung sind das fahrzeugseitige Halteelement und/oder die Aufnahmeeinheit zur Leuchteneinheit hin konisch ausgeführt. Hierdurch wird auf einfache und wirkungsvolle Weise ermöglicht, dass zur sicheren Selbsthemmung der Vorrichtung die Führungsachse der Sperreinheit die Längsachse der Vorrichtung schneidet.

Besonders bevorzugt weist die Wandung des fahrzeugseitigen Halteelements mindestens eine Aussparung zur Anhebung der Aufnahmeeinheit in dem fahrzeugseitigen Halteelement auf. Günstigerweise kann hierdurch eine einfache Demontage der Vorrichtung erfolgen, indem über diese Aussparungen die Aufnahmeeinheit angehoben werden und die Blockade zwischen Dorn und fahrzeugseitigem Haltemittel aufgehoben werden kann.

Weitere Vorteile der Erfindung ergeben sich aus den weiteren Ansprüchen, der Beschreibung und der Zeichnung.

Anhand von einem in der Zeichnung dargestellten bevorzugten Ausführungsbeispiel wird die Erfindung nachfolgend näher beschrieben. In der Figur werden gleiche oder im Wesentlichen gleich bleibende Elemente mit den gleichen Bezugszeichen versehen.

Die einzige Figur zeigt einen Schnitt durch eine erfindungsgemäße Vorrichtung zum mindestens teilweisen Befestigen einer Leuchteneinheit 10 an einem Fahrzeug 12. Im vorliegenden Ausführungsbeispiel handelt es sich bei der Leuchteneinheit 10 um die Heckleuchte des Fahrzeugs 12. Eine derartige Leuchteneinheit 10 umfasst in der Regel ein Leuchtengehäuse 10a, in dem sich, hier nicht dargestellt, ein Reflektor oder eine Linsenanordnung und ein Leuchtmittel, wie beispielsweise eine Glühlampe oder eine LED befinden. Ferner weist das Leuchtengehäuse 10a üblicherweise auch noch eine ebenfalls hier nicht dargestellte Lichtaustrittsscheibe auf, durch welche das vom Leuchtmittel ausgestrahlte Licht nach außen strahlt. Die Leuchteneinheit 10 ist mit ihrem Leuchtengehäuse 10a über die erfindungsgemäße Vorrichtung an dem Fahrzeug 12 befestigbar. Selbstverständlich kann die Leuchteneinheit 10 außer über mindestens eine erfindungsgemäße Vorrichtung auch über weitere, einem Fachmann als sinnvoll erscheinende Befestigungsvorrichtungen, wie beispielsweise Schraub- oder Clipsverbindungen, am Fahrzeug befestigt werden.

Die Vorrichtung zum mindestens teilweisen Befestigen der Leuchteneinheit 10 an dem Fahrzeug 12 umfasst ein Haltemittel 14, das ein leuchteneinheitsseitiges Halteelement 14a und ein mit dem leuchteneinheitsseitigen Halteelement 14a zusammenwirkendes, vorrichtungsseitiges Halteelement 14b aufweist, wobei das leuchteneinheitsseitige Halteelement 14a in dem vorrichtungsseitigen Halteelement 14b entlang einer Längsachse 16 der Vorrichtung mindestens teilweise aufgenommen ist.

Im vorliegenden Ausführungsbeispiel ist das vorrichtungsseitige Halteelement 14b als topfförmiges Bauteil mit einem Boden 22 und einer sich an den Boden 22 anschließenden Wandung 24 ausgebildet ist, wobei der Boden 22 mindestens eine Öffnung 26 zur Durchführung des leuchteneinheitsseitigen Halteelements 14a aufweist. Zusätzlich ist ein Deckel 28 vorgesehen, welcher das nach oben hin bzw. auf einer der Leuchteneinheit 10 abgewandten Seite offene, vorrichtungsseitige Halteelement 14b mindestens teilweise abdeckt. Vorzugsweise ist der Deckel 28 formschlüssig beispielsweise über eine Clipsverbindung mit dem vorrichtungsseitigen Halteelement 14b verbunden. Zur Durchführung des leuchteneinheitsseitigen Halteelements 14a weist der Deckel 28 eine Durchgangsöffnung 28a auf. Dies bedeutet, dass das mit dem Deckel 28 verschlossene, vorrichtungsseitige Halteelement 14b jeweils an zwei einander gegenüberliegenden Seiten Öffnungen 26, 28a zum Hindurchführen des leuchteneinheitsseitigen Halteelements 14a aufweist.

Im vorliegenden Ausführungsbeispiel weist das leuchteneinheitsseitige Halteelement 14a einen Dorn 30 auf, der mindestens teilweise in dem vorrichtungsseitigen Halteelement 14b aufgenommen ist, indem der Dorn 30 durch die Öffnung 26 sowie die Durchgangsöffnung 28a durchgesteckt wird. Bevorzugt weist der Dorn 30 des leuchteneinheitsseitigen Halteelements 14a an einem seiner Enden ein Gewinde 34 auf, welches in eine entsprechende Gewindebohrung 10b der Leuchteneinheit 10 bzw. des Leuchtengehäuses 10a einschraubbar ist. Zur Fixierung des Dorns 30 in der Gewindebohrung 10b der Leuchteneinheit 10 bzw. des Leuchtengehäuses 10a ist ein als Seckskant ausgebildeter Anschlag 36 einstückig mit dem Gewinde 34 des Doms 30 vorgesehen.

Um eine Vorrichtung zum Befestigen einer Leuchteneinheit 10 an einem Fahrzeug 12 bereitzustellen, die eine einfache und schnelle Montage der Leuchteneinheit 10 am Fahrzeug 12 ermöglicht, ist erfindungsgemäß vorgesehen, dass das leuchteneinheitsseitige Halteelement 14a über eine Sperreinrichtung 18 in wenigstens einer Richtung 16b der Längsachse 16 selbsthemmend in dem vorrichtungsseitigen Halteelement 14b gehalten ist.

In vorteilhafter Weise weist die Sperreinrichtung 18 eine Sperreinheit 18a auf, die entlang einer Führungsachse 20 bewegbar ist, welche die Längsachse 16 der Vorrichtung schneidet. Die Führungsachse 20 schneidet die Längsachse 16 vorzugsweise in einem spitzen Winkel α. Die Sperreinheit 18a besteht aus mindestens einem Sperrelement, wobei im vorliegenden Ausführungsbeispiel jedoch vorzugsweise mehrere Sperrelemente vorgesehen sind. Bevorzugt handelt es sich hierbei um Kugeln 18a, wobei selbstverständlich jede einem Fachmann als sinnvoll erscheinende Ausführungsform des Sperrelementes möglich ist. Liegen wie im vorliegenden Ausführungsbeispiel ausgeführt, mehrere Sperrelemente 18a vor, so schneiden sich deren Führungsachsen 20 vorzugsweise in einem gemeinsam auf der Längsachse 16 der Vorrichtung liegenden Punkt 16a.

Die Sperreinrichtung 18 weist eine Federeinheit 18b auf, welche die Sperreinheit 18a entlang der Längsachse 16 zur Leuchteneinheit 10 hin beaufschlagt. Im vorliegenden Ausführungsbeispiel ist die Federeinheit 18b als Spiraldruckfeder ausgebildet, wobei auch jede weitere einem Fachmann als sinnvoll erscheinende Federausführung denkbar wäre.

Die Sperreinrichtung 18 weist eine in dem vorrichtungsseitigen Halteelement 14b angeordnete Aufnahmeeinheit 18c auf, welche die Sperreinheit 18a aufnimmt. Im vorliegenden Ausführungsbeispiel ist die Aufnahmeeinheit 18c als topfförmige Hülse ausgebildet, welche die Sperreinheit 18a derart aufnimmt, dass die Sperreinheit 18a zwischen dem Dorn 30 des leuchteneinheitsseitigen Halteelements 14a und der Wandung 24 des vorrichtungsseitigen Halteelements 14b angeordnet ist.

Um zur sicheren Selbsthemmung der Vorrichtung ein Schneiden der Längsachse 16 der Vorrichtung durch die Führungsachse 20 der Sperreinheit 18a zu ermöglichen, sind bevorzugt das vorrichtungsseitige Halteelement 14b und/oder die Aufnahmeeinheit 18c zur Leuchteneinheit 10 hin konisch ausgeführt.

Vorzugsweise weist die Wandung 24 des vorrichtungsseitigen Halteelements 14b mindestens eine hier nicht sichtbare Aussparung zur Anhebung der Aufnahmeeinheit 18c in dem vorrichtungsseitigen Halteelement 14b auf.

Vor der Montage der Leuchteneinheit 10 an das Fahrzeug 12 wird das Leuchtengehäuse 10a mit dem Dorn 30 des leuchteneinheitsseitigen Halteelements 14a versehen, indem der Dorn 30 in das Leuchtengehäuse 10a eingeschraubt wird. Anschließend wird die Kontermutter 36 auf dem Dorn 30 gegengeschraubt. Ferner wird das vorrichtungsseitige Halteelement 14b mit der Sperreinrichtung 18 bestückt, indem die mit der Sperreinheit 18a versehene Aufnahmeeinheit 18c in das vorrichtungsseitige Halteelement 14b eingesetzt, die Feder auf die Sperreinheit 18a aufgesetzt und der Deckel 28 auf das vorrichtungsseitige Halteelement 14b aufgeclipst wird. Hierdurch stützt sich die Federeinheit 18b am Deckel 28 ab und drückt die mit der Sperreinheit 18a versehene Aufnahmeeinheit 18c gegen den Boden 22 des vorrichtungsseitigen Halteelements 14b. Zur Montage der Leuchteneinheit 10 an das Fahrzeug 12 wird die Leuchteneinheit 10 in die Karosserie des Fahrzeugs 12 gefügt, so dass der Dorn 30 nach innen ragt. Zum mindestens teilweisen Befestigen der Leuchteneinheit 10 wird das vorrichtungsseitige Halteelement 14b auf den Dorn 30 aufgesteckt, so dass der Dorn 30 das vorrichtungsseitige Halteelement 14b durchdringt. Beim Aufstecken des vorrichtungsseitigen Halteelements 14b bzw. bei einem Einstecken des Domes 30 in das vorrichtungsseitige Halteelement 14b wird die Federeinheit 18b ein wenig zusammengedrückt, so dass sich die Aufnahmeeinheit 18c vom Boden 22 des vorrichtungsseitigen Halteelements 14b abhebt, wodurch die in der Aufnahmeeinheit 18c aufgenommenen Kugeln 18a freigängig werden, während sie bei einem Abziehen des vorrichtungsseitigen Halteelements 14b bzw. bei einem Herausziehen des Domes 30 und dadurch verursachten Absenken der Aufnahmeeinheit 18c auf den Boden 22 des vorrichtungsseitigen Halteelements 14b eine Blockade zwischen Dorn 30 und vorrichtungsseitigem Halteelement 14b erzeugen. Durch die Federeinheit 18b werden die Kugeln 18a immer im Berührungskontakt mit dem vorrichtungsseitigen Halteelement 14b gehalten. Somit ist der Dorn 30 nur in der der Kraft der Federeinheit 18b entgegengesetzten Richtung 16a verschiebbar, wohingegen er in Richtung 16b der Kraft der Federeinheit 18b selbsthemmend und unverschiebbar gehalten wird. Zur Demontage der Vorrichtung weist die Wandung 24 des vorrichtungsseitigen Halteelements 14b Aussparungen auf, über welche die Aufnahmeeinheit 18c in dem vorrichtungsseitigen Halteelement 14b anhebbar ist. Hierdurch ist die Blockade zwischen Dorn 30 und vorrichtungsseitigem Halteelement 14b aufhebbar. Ein Abziehen des vorrichtungsseitigen Halteelements 14b bzw. ein Herausziehen des Domes 30 aus dem vorrichtungsseitigen Halteelement 14b ist nunmehr möglich.
- 10: Leuchteneinheit
- 10a: Leuchtengehäuse
- 10b: Gewindebohrung
- 12: Fahrzeug
- 14: Haltemittel
- 14a: leuchteneinheitsseitiges Halteelement
- 14b: vorrichtungsseitiges Halteelement
- 16: Längsachse
- 16a: Richtung (Halteelement verschiebbar)
- 16b: Richtung (Halteelement unverschiebbar)
- 18: Sperreinrichtung
- 18a: Sperreinheit
- 18b: Federeinheit
- 18c: Aufnahmeeinheit
- 20: Führungsachse
- 22: Boden
- 24: Wandung
- 26: Öffnung
- 28: Deckel
- 28a: Durchgangsöffnung
- 30: Dorn
- 34: Gewinde
- 36: Sechskant
- α: Winkel

## Patentansprüche

1. Fahrzeugleuchteneinheit (10) mit einer Vorrichtung zum mindestens teilweisen Befestigen der Leuchteneinheit (10) an dem Fahrzeug (12) mit einem Haltemittel (14), das ein leuchteneinheitsseitiges Halteelement (14a) und ein mit dem leuchteneinheitsseitigen Halteelement (14a) zusammenwirkendes, fahrzeugseitiges Halteelement (14b) aufweist, wobei das leuchteneinheitsseitige Halteelement (14a) in dem fahrzeugseitigen Halteelement (14b) entlang einer Längsachse (16) der Vorrichtung mindestens teilweise aufgenommen ist, wobei das leuchteneinheitsseitige Halteelement (14a) über eine Sperreinrichtung (18) in wenigstens einer Richtung der Längsachse (16) selbsthemmend in dem fahrzeugseitigen Halteelement (14b) gehalten ist und wobei die Sperreinrichtung (18) eine Sperreinheit (18a) aufweist, die entlang einer Führungsachse (20) bewegbar ist, welche die Längsachse (16) der Vorrichtung schneidet, **dadurch gekennzeichnet, dass** die Sperreinrichtung (18) eine Federeinheit (18b) aufweist, welche die Sperreinheit (18a) entlang der Längsachse (16) zur Leuchteneinheit (10) hin beaufschlagt.

2. Fahrzeugleuchteneinheit nach Anspruch 1, **dadurch gekennzeichnet, dass** die Sperreinrichtung (18) eine in dem fahrzeugseitigen Halteelement (14b) angeordnete Aufnahmeeinheit (18c) aufweist, welche die Sperreinheit (18a) aufnimmt.

3. Fahrzeugleuchteneinheit nach einem der vorhergehenden Ansprüche, **dadurch gekennzeichnet, dass** das fahrzeugseitige Halteelement (14b) als topfförmiges Bauteil mit einem Boden (22) und einer sich an den Boden (22) anschließenden Wandung (24) ausgebildet ist, wobei der Boden (22) mindestens eine Öffnung (26) zur Durchführung des leuchteneinheitsseitigen Halteelements (14a) aufweist.

4. Fahrzeugleuchteneinheit nach einem der vorhergehenden Ansprüche, **gekennzeichnet durch** einen Deckel (28), welcher das fahrzeugseitige Halteelement (14b) überdeckt.

5. Fahrzeugleuchteneinheit nach einem der vorhergehenden Ansprüche, **dadurch gekennzeichnet, dass** das leuchteneinheitsseitige Halteelement (14a) einen Dorn (30) aufweist, der mindestens teilweise in dem fahrzeugseitigen Halteelement (14b) aufgenommen ist.

6. Fahrzeugleuchteneinheit nach einem der Ansprüche 2 bis 5, **dadurch gekennzeichnet, dass** die Aufnahmeeinheit (18c) als topfförmige Hülse ausgebildet ist, welche die Sperreinheit (18a) derart aufnimmt, dass die Sperreinheit (18a) zwischen dem Dorn (30) des leuchteneinheitsseitigen Halteelements (14a) und der Wandung (24) des fahrzeugseitigen Halteelements (14b) angeordnet ist.

7. Fahrzeugleuchteneinheit nach einem der vorhergehenden Ansprüche, **dadurch gekennzeichnet, dass** das fahrzeugseitige Halteelement (14b) und/oder die Aufnahmeeinheit (18c) zur Leuchteneinheit (10) hin konisch ausgeführt sind.

8. Fahrzeugleuchteneinheit nach einem der Ansprüche 3 bis 7, **dadurch gekennzeichnet, dass** die Wandung (24) des fahrzeugseitigen Halteelements (14b) mindestens eine Aussparung (32) zur Anhebung der Aufnahmeeinheit (18c) in dem fahrzeugseitigen Halteelement (14b) aufweist.

## Claims

1. Vehicle lamp unit (10) having a device for at least partial fastening of the lamp unit (10) to the vehicle (12) with a holding means (14) having a lamp unit-side holding element (14a) and a vehicle-side holding element (14b) interacting with the lamp unit-side holding element (14a), where the lamp unit-side holding element (14a) is at least partially received in the vehicle-side holding element (14b) along a longitudinal axis (16) of the device, where the lamp unit-side holding element (14a) is held by a blocking device (18) in at least one direction of the longitudinal axis (16) in self-locking manner inside the vehicle-side holding element (14b) and where the blocking device (18) has a blocking unit (18a) movable along a guide axis (20) intersecting the longitudinal axis (16) of the device, **characterized in that** the blocking device (18) has a spring unit (18b) which acts on the blocking unit (18a) along the longitudinal axis (16) towards the lamp unit (10).

2. Vehicle lamp unit according to Claim 1, **characterized in that** the blocking device (18) has a receiving unit (18c) arranged inside the vehicle-side holding element (14b) and receiving the blocking unit (18a),

3. Vehicle lamp unit according to one of the preceding claims, **characterized in that** the vehicle-side holding element (14b) is designed as a cup-like component (22) with a bottom (22) and a wall (24) adjoining said bottom (22), where the bottom (22) has at least one opening (26) for passing through the lamp unit-side holding element (14a).

4. Vehicle lamp unit according to one of the preceding claims, **characterized by** a cover (28) covering the vehicle-side holding element (14b).

5. Vehicle lamp unit according to one of the preceding claims, **characterized in that** the lamp unit-side holding element (14a) has a spike (30) at least partially received inside the vehicle-side holding element (14b).

6. Vehicle lamp unit according to one of Claims 2 to 5, **characterized in that** the receiving unit (18c) is designed as a cup-like sleeve receiving the blocking unit (18a) such that the blocking unit (18a) is arranged between the spike (30) of the lamp unit-side holding element (14a) and the wall (24) of the vehicle-side holding element (14b).

7. Vehicle lamp unit according to one of the preceding claims, **characterized in that** the vehicle-side holding element (14b) and/or the receiving unit (18c) are designed conical towards the lamp unit (10).

8. Vehicle lamp unit according to one of Claims 3 to 7, **characterized in that** the wall (24) of the vehicle-side holding element (14b) has at least one recess (32) for lifting the receiving unit (18c) inside the vehicle-side holding element (14b).

## Revendications

1. Bloc optique pour véhicule (10) avec un dispositif pour fixer au moins partiellement le bloc optique (10) au véhicule (12) avec un moyen de fixation (14) présentant un élément de fixation côté bloc optique (14a) et un élément de fixation côté véhicule (14b) interagissant avec l'élément de fixation côté bloc optique (14a), sachant que l'élément de fixation côté bloc optique (14a) est au moins partiellement logé dans l'élément de fixation côté véhicule (14b) le long d'un axe longitudinal (16) du dispositif, que l'élément de fixation côté bloc optique (14a) est maintenu dans l'élément de fixation côté véhicule (14b) par un organe de blocage (18) de manière autobloquante dans au moins un sens de l'axe longitudinal (16), et que l'organe de blocage (18) présente une unité de blocage (18a) qui peut être déplacée le long d'un axe de guidage (20) qui coupe l'axe longitudinal (16) du dispositif, **caractérisé en ce que** l'organe de blocage (18) présente une unité à ressort (18b) qui exerce une pression sur l'unité de blocage (18a) le long de l'axe longitudinal (16) en direction du bloc optique (10).

2. Bloc optique pour véhicule selon la revendication 1, **caractérisé en ce que** l'organe de blocage (18) présente une unité de logement (18c) disposée dans l'élément de fixation côté véhicule (14b) et qui loge l'unité de blocage (18a).

3. Bloc optique pour véhicule selon l'une des revendications précédentes, **caractérisé en ce que** l'élément de fixation côté véhicule (14b) est formé comme composant en forme de vase avec un fond (22) et une paroi (24) se raccordant au fond (22), sachant que le fond (22) présente au moins une ouverture (26) pour le passage de l'élément de fixation côté bloc optique (14a).

4. Bloc optique pour véhicule selon l'une des revendications précédentes, **caractérisé par** un couvercle (28) qui recouvre l'élément de fixation côté véhicule (14b).

5. Bloc optique pour véhicule selon l'une des revendications précédentes, **caractérisé en ce que** l'élément de fixation côté bloc optique (14a) présente une broche (30) qui est logée au moins partiellement dans l'élément de fixation côté véhicule (14b).

6. Bloc optique pour véhicule selon l'une des revendications 2 à 5, **caractérisé en ce que** l'unité de logement (18c) est formée comme douille en forme de vase qui loge l'unité de blocage (18a) de manière telle que l'unité de blocage (18a) est placée entre la broche (30) de l'élément de fixation côté bloc optique (14a) et la paroi (24) de l'élément de fixation côté véhicule (14b).

7. Bloc optique pour véhicule selon l'une des revendications précédentes, **caractérisé en ce que** l'élément de fixation côté véhicule (14b) et/ou l'unité de logement (18c) ont une forme conique s'amincissant en direction du bloc optique (10).

8. Bloc optique pour véhicule selon l'une des revendications 3 à 7, **caractérisé en ce que** la paroi (24) de l'élément de fixation côté véhicule (14b) présente au moins un évidement (32) pour soulever l'unité de logement (18c) dans l'élément de fixation côté véhicule (14b).
